# EUROPÄISCHE PATENTSCHRIFT

(11) **EP 2 754 343 B1**
(45) Veröffentlichungstag und Bekanntmachung des Hinweises auf die Patenterteilung: **01.11.2017**
(21) Anmeldenummer: 13151318.6
(22) Anmeldetag: 15.01.2013
(51) Int. Cl.: A01B 45/02

(54) **FAHRBARE BODENBEARBEITUNGSVORRICHTUNG MIT SCHUTZEINRICHTUNG**
MOBILE SOIL CULTIVATION DEVICE WITH PROTECTIVE DEVICE
DISPOSITIF DE TRAITEMENT DE SOL MOBILE AVEC DISPOSITIF DE PROTECTION

(43) Veröffentlichungstag der Anmeldung: 16.07.2014
(73) Patentinhaber: Redexim Handel- en Exploitatie Maatschappij B.V., 3702 AC Zeist (NL)
(72) Erfinder: DE BREE, Cornelius Hermanus Maria, 3971 ND Driebergen (NL)
(74) Vertreter: dompatent von Kreisler Selting Werner - Partnerschaft von Patent- und Rechtsanwälten mbB

(56) Entgegenhaltungen:
- EP-A1- 0 037 595
- EP-A1- 0 853 869
- EP-A1- 2 106 679
- DE-A1-102005 021 025

## Beschreibung

Die Erfindung betrifft eine fahrbare Bodenbearbeitungsvorrichtung nach dem Oberbegriff des Anspruchs 1 sowie ein Verfahren zum Bearbeiten eines Bodens nach dem Oberbegriff des Anspruchs 10. Es sind Bodenbearbeitungsvorrichtungen aus dem Stand der Technik bekannt, die mindestens einen Maschinenrahmen, einen Antrieb für mindestens ein aufund abbewegbares Stechwerkzeug aufweisen, wobei das Stechwerkzeug in den Boden einstechbar und wieder herausziehbar ist. Das Stechwerkzeug befindet sich vor dem Einstechen in den Boden in einer Ausgangslage unter einem vorgegebenen Einstechwinkel und führt im Boden aufgrund der Bewegung des Maschinenrahmens in Fahrtrichtung eine die Auf- und Abbewegung überlagernde Schwenkbewegung um eine erste Schwenkachse in Richtung einer ersten Schwenkrichtung aus. Ferner ist eine mit dem Stechwerkzeug gekoppelte Rückholeinrichtung vorgesehen, die das Stechwerkzeug nach dem Austritt aus dem Boden zurück in die Ausgangslage durch Verschwenken des Stechwerkzeugs in eine der ersten Schwenkrichtung entgegengesetzte zweite Schwenkrichtung überführt.

Aus der europäischen Offenlegungsschrift EP-A-0037595 ist eine Bodenbearbeitungsvorrichtung bekannt, die zwei parallelogrammartig geführte Tragarme aufweist, die am einen Ende schwenkbar einen Werkzeughalter halten und die am anderen Ende an einem Maschinenrahmen schwenkbar gelagert sind. Eine Schubstange eines Kugeltriebs ist an dem Werkzeughalter angelenkt und treibt diesen an, so dass dieser einer Auf- und Abbewegung ausführt. Einer der beiden Tragarme ist längenveränderlich und beinhaltet eine Anschlagfedereinrichtung. Sobald sich das Stechwerkzeug außerhalb des Bodens befindet, wird der Tragarm aufgrund der Federkraft an dem Anschlag gezogen. Bei eingestochenem Stechwerkzeug und Vorwärtsbewegung der Bodenbearbeitungsvorrichtung verschwenkt das Werkzeug mit dem Werkzeughalter entgegen der Fahrtrichtung und der längenveränderliche Tragarm wird gegen die Federkraft verlängert.

Bei den bisher bekannten Bodenbearbeitungsvorrichtungen besteht jedoch der Nachteil, dass die Stechwerkzeuge beschädigt werden können, wenn sie in dem Boden auf einen harten Gegenstand, wie beispielsweise einen Stein, auftreffen. Aufgabe der vorliegenden Erfindung ist es daher, eine Bodenbearbeitungsvorrichtung und ein Verfahren zum Bearbeiten einer Bodenfläche zu schaffen, bei der bzw. bei dem die Bodenbearbeitungsvorrichtung vor Beschädigung geschützt ist, wenn das mindestens eine Stechwerkzeug auf einen harten Gegenstand im Boden trifft.

Zur Lösung dieser Aufgabe dienen die Merkmale der Ansprüche 1 und 10. Die Erfindung sieht vor, dass die Rückholeinrichtung mit einer Schutzeinrichtung gekoppelt ist, die ein Verschwenken des Stechwerkzeugs in die zweite Schwenkrichtung über die Ausgangslage hinaus erlaubt, so dass das Stechwerkzeug beim Auftreffen auf einen harten Gegenstand im Boden durch Verschwenken des Stechwerkzeugs in die zweite Schwenkrichtung über die Ausgangslage hinaus verschwenkbar ist.

Dies hat den Vorteil, dass das Stechwerkzeug auch in Richtung der zweiten Schwenkrichtung dem Gegenstand ausweichen kann, obwohl sich das Stechwerkzeug bereits in der Ausgangslage befindet. Durch das Ausweichen des Stechwerkzeugs kommt es zu keinen gravierenden Beschädigungen der Maschine oder des Stechwerkzeug.

Es ist ein Anschlag vorgesehen, der das Verschwenken des Stechwerkzeugs in die zweite Schwenkrichtung beim Erreichen der Ausgangslage begrenzt.

Die mit dem mindestens einen Stechwerkzeug gekoppelte Rückholeinrichtung kann über ein zweites Schwenkgelenk mit der Schutzeinrichtung gekoppelt sein. Die Rückholeinrichtung kann über ein drittes Schwenkgelenk mit dem Stechwerkzeug gekoppelt sein. Die Rückholeinrichtung ist vorzugsweise zwischen dem Stechwerkzeug und der Schutzeinrichtung angeordnet.

Die Schutzeinrichtung kann zumindest einen ersten Schwenkarm und eine Federeinrichtung aufweisen, wobei der erste Schwenkarm entgegen der Federkraft der Federeinrichtung in eine dritte Schwenkrichtung verschwenkbar ist, wobei die Rückholeinrichtung über das zweite Schwenkgelenk mit dem ersten Schwenkarm der Schutzeinrichtung gekoppelt ist.

Beim Verschwenken des Stechwerkzeugs über die Ausgangslage hinaus kann das zweite Schwenkgelenk der Rückholeinrichtung bewegbar sein, so dass der mit dem zweiten Schwenkgelenk gekoppelte erste Schwenkarm der Schutzeinrichtung entgegen der Federkraft einer Federeinrichtung der Schutzeinrichtung in eine dritte Schwenkrichtung verschwenkbar ist.

Die Federkraft der Federeinrichtung der Schutzeinrichtung ist derart gewählt, dass die Schutzeinrichtung die Bewegung des Stechwerkzeug über die Ausgangslage hinaus erst erlaubt, wenn eine Kraft auf das Stechwerkzeug ausgeübt wird, die eine vorbestimmte Kraft überschreitet.

Auf diese Weise wird sichergestellt, dass das Stechwerkzeug erste über die Ausgangslage hinaus bewegt werden kann, wenn eine hohe Kraft auf das Stechwerkzeug ausgeübt wird, wie dies beispielsweise beim Auftreffen auf einen harten Gegenstand im Boden geschieht.

Es kann zumindest ein Werkzeughalter für das mindestens eine Stechwerkzeug vorgesehen sein, der um die erste Schwenkachse in dem von dem Antrieb auf-und abbewegbaren Führungsarm gelagert ist.

Es können mehrere Stechwerkzeuge an einem Werkzeughalter befestigt sein.

Es können mehrere Werkzeughalter nebeneinander angeordnet sein, an denen jeweils mehrere Stechwerkzeuge befestigt sind, wobei jeweils eine Rückholeinrichtung mit jeweils einem Werkzeughalter gekoppelt ist, wobei die Rückholeinrichtungen jeweils mit einer Schutzeinrichtung gekoppelt sind.

Dies hat den Vorteil, dass falls nur ein Stechwerkzeug oder mehrere Stechwerkzeuge eines Werkzeughalters auf einen harten Gegenstand im Boden treffen, nur dieser Werkzeughalter ausweichen kann. Die anderen Stechwerkzeuge können im normalen Betrieb weiter betrieben werden.

Der erste Schwenkarm der Schutzeinrichtung kann entgegen der Federkraft der Federeinrichtung in die dritte Schwenkrichtung verschwenkbar sein, wobei ein Schutzeinrichtungsanschlag vorgesehen ist, der das Verschwenken des ersten Schwenkarms in die der dritten Schwenkrichtung entgegengesetzte vierte Schwenkrichtung begrenzt.

Gemäß der vorliegenden Erfindung ist ferner ein Verfahren zum Bearbeiten eines Bodens vorgesehen, das die Verfahrensschritte des Anspruchs 10 aufweist. Im Folgenden wird unter Bezugnahme auf die Zeichnungen ein Ausführungsbespiel der Erfindung näher erläutert.

Es zeigen schematisch:
- Fig. 1: eine Bodenbearbeitungsvorrichtung in der Seitenansicht,
- Fig. 2: eine Bodenbearbeitungsvorrichtung mit verschwenktem und eingestochenem Stechwerkzeug,
- Fig. 3: eine Bodenbearbeitungsvorrichtung kurz vor dem Einstechen des Stechwerkzeugs,
- Fig. 4: eine Bodenbearbeitungsvorrichtung, die auf einen harten Gegenstand im Boden trifft,
- Fig. 5: eine vergrößerte Darstellung der Schutzeinrichtung,
- Fig. 6: die Schutzeinrichtung im verschwenkten Zustand.
- Fig. 7: die Bodenbearbeitungsvorrichtung aus den Figuren 1 - 6 in der Rückansicht.

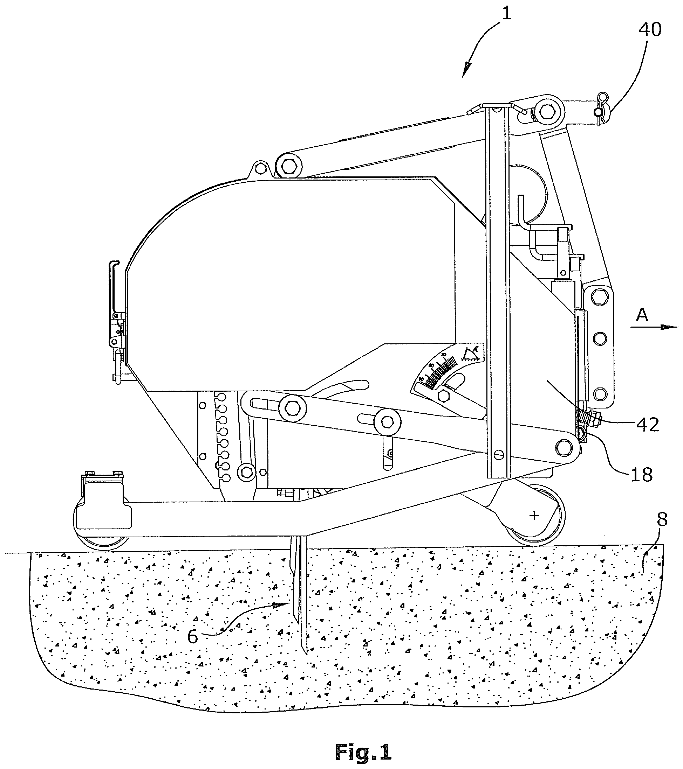

Fig. 1 zeigt eine Bodenbearbeitungsvorrichtung 1 in der Seitenansicht. Die Bodenbearbeitungsvorrichtung 1 weist eine Ankoppeleinrichtung 40 auf, mit der die Bodenbearbeitungsvorrichtung 1 mit einem Zugfahrzeug gekoppelt werden kann und mit dem Zugfahrzeug gezogen werden kann. Alternativ könnte die Bodenbearbeitungsvorrichtung 1 auch selbstfahrend sein.

Die Bodenbearbeitungsvorrichtung 1 weist einen Maschinenrahmen 42 auf. Ferner weist die Bodenbearbeitungsvorrichtung 1 einen Antrieb 4 für mindestens ein auf- und abwegbares Stechwerkzeug 6 auf. Im vorliegenden Ausführungsbeispiel sind eine Vielzahl von Stechwerkzeugen 6 vorgesehen. Die Stechwerkzeuge 6 können in den Boden einstechbar und wieder herausziehbar sein. Die Stechwerkzeuge 6 befinden sich vor dem Einstechen in den Boden 8 in einer Ausgangslage unter einem vorgegebenen Einstechwinkel und führen im Boden 8 aufgrund der Bewegung des Maschinenrahmens 42 in Fahrtrichtung A eine die Auf- und Abbewegung überlagerte Schwenkbewegung um eine erste Schwenkachse 10 in Richtung einer ersten Schwenkrichtung 12 aus.

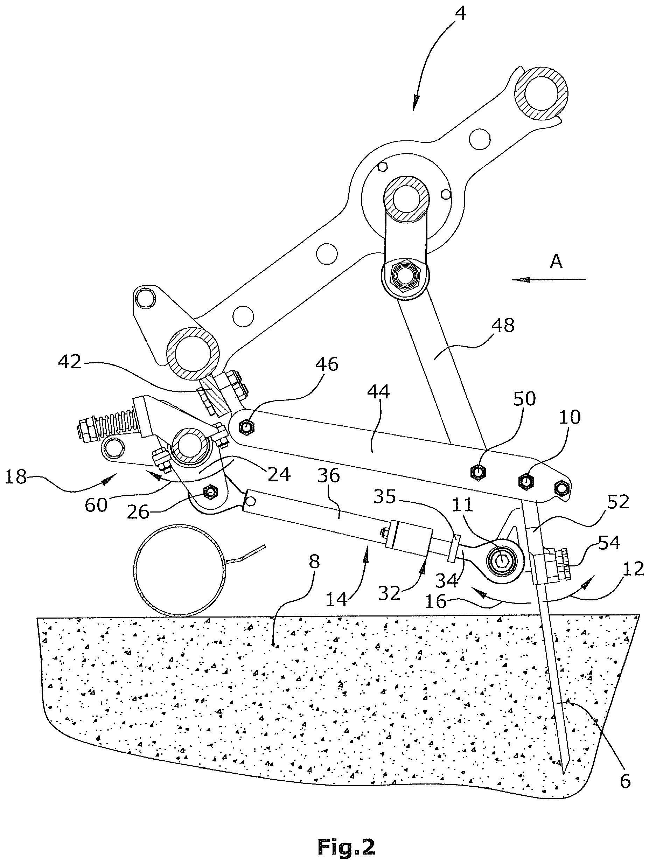

In Figur 2 ist schematisch die Seitenansicht auf einen Antrieb 4 für ein auf- und abbewegbares Stechwerkzeug 6 dargestellt. An dem Maschinenrahmen 42 ist ein Führungsarm 44 gelenkig um eine Achse 46 gelagert. Der Führungsarm 44 ist mit dem Antrieb 4, der ein Kurbelantrieb ist, über die Schubstange 48 gelenkig über das Gelenk 50 gekoppelt. Der Führungsraum 44 wird von dem Antrieb 4 über die Schubstange 48 angetrieben. Der Führungsarm 44 wird aufgrund des Antriebs 4 auf- und abbewegt.

An dem der Schwenkachse 46 gegenüberliegenden Ende des Führungsarms 44 ist um eine erste Schwenkachse 10 ein Werkzeughalter 52 gelagert. An dem Werkzeughalter 52 ist über eine Befestigungseinrichtung 54 zumindest ein Stechwerkzeug 6 befestigt. Es sind vorzugsweise mehrere Stechwerkzeuge 6 an dem Werkzeughalter 52 befestigt. Im dargestellten Ausführungsbeispiel sind drei Stechwerkzeuge 6 an dem Werkzeughalter 52 befestigt. Aufgrund der Bewegung des Maschinenrahmens 42 in Fahrtrichtung A führt das zumindest eine Stechwerkzeug 6 eine der Auf- und Abbewegung überlagerte Schwenkbewegung um die erste Schwenkachse 10 in Richtung der ersten Schwenkrichtung 12 aus.

Ferner ist mit dem Werkzeughalter 52 über das Gelenk 11 eine Rückholeinrichtung 14 gekoppelt. Die dargestellte Rückholeinrichtung ist vorzugsweise parallelogrammartig neben dem Führungsarm 44 angeordnet. Die dargestellte Rückholeinrichtung 14 ist vorzugsweise eine Kolbenzylindereinheit. Die Rückholeinrichtung 14 weist das Kolbenelement 34, das eine Kolbenstange ist, auf. Ferner weist die Rückholeinrichtung 14 das Zylinderelement 36 auf. In dem Zylinderelement 36 ist eine nicht dargestellte Druckfeder angeordnet. Beim Verschwenken des zumindest einen Stechwerkzeugs 6 in die erste Schwenkrichtung 12 im Boden wird das Kolbenelement 34 aus dem Zylinderelement 36 herausgezogen, wobei die innerhalb des Zylinderelements 36 angeordnete Druckfeder zusammengedrückt wird. Somit kann das zumindest eine Stechwerkzeug 6 im Boden entgegen der Federkraft der Feder der Rückholeinrichtung 14 in die erste Schwenkrichtung 12 verschwenkt werden.

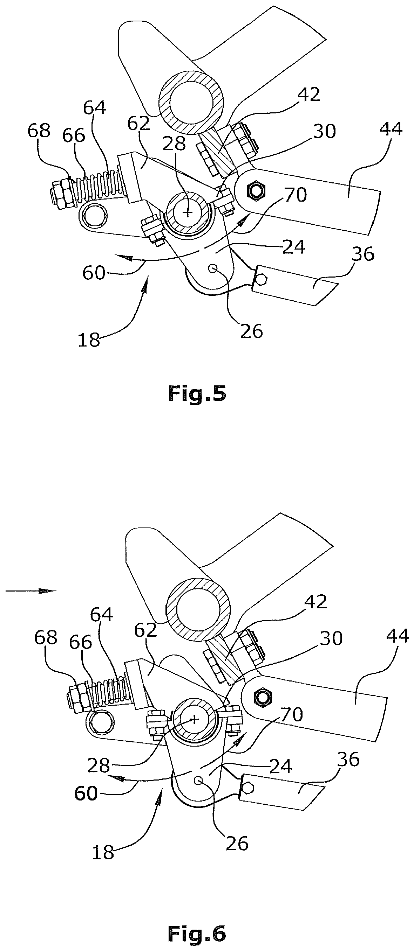

Die Rückholeinrichtung 14 ist an dem dem Gelenk 11 gegenüberliegenden Ende über ein zweites Schwenkgelenk 26 mit einer Schutzeinrichtung 18 gekoppelt. Die Schutzeinrichtung 18 wird in Bezug zu den Figuren 5 und 6 näher erläutert.

In Figur 2 ist ein Zustand dargestellt, bei dem das Stechwerkzeug 6 in Richtung der ersten Schwenkrichtung 12 verschwenkt ist. Wie aus Figur 2 zu entnehmen ist, ist das Kolbenelement 34 aus dem Zylinderelement 36 gezogen. An dem Zylinderelement 36 ist ein Anschlag 33 angeordnet, der eine Dämpfungseinrichtung 32 aufweist. Ferner weist das Kolbenelement 34 einen Flansch 35 auf.

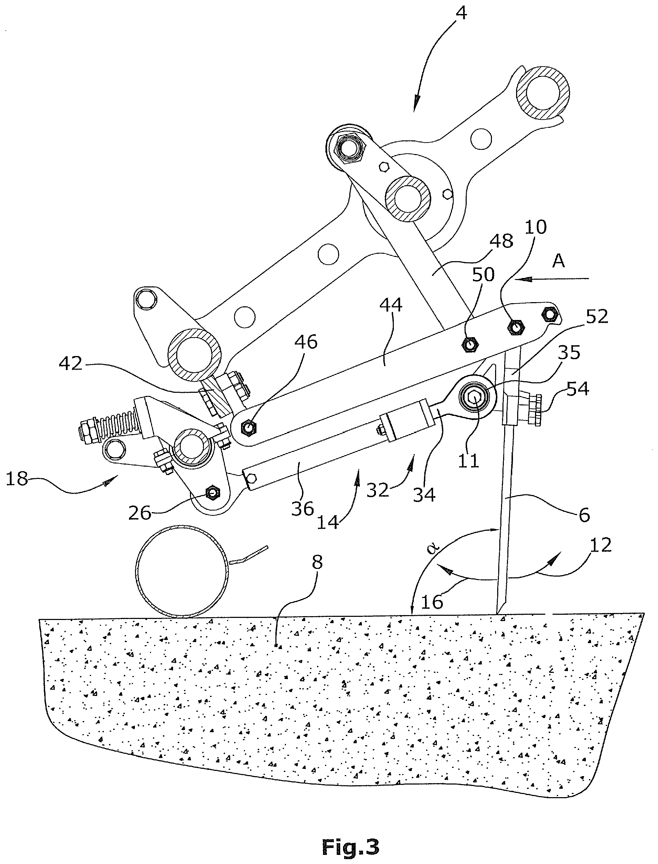

Die mit dem Stechwerkzeug 6 gekoppelte Rückholeinrichtung 14 überführt das Stechwerkzeug 6 nach dem Austritt aus dem Boden 8 zurück in die Ausgangslage durch Verschwenken des Stechwerkzeugs 6 in eine der ersten Schwenkrichtung 12 entgegengesetzte zweite Schwenkrichtung 16. In Figur 3 ist ein Zustand dargestellt, bei dem das Stechwerkzeug 6 bereits aus dem Boden herausgezogen worden ist und bereits durch die Rückholeinrichtung 14 wieder zurück in die Ausgangslage verschwenkt worden ist. In der Ausgangslage begrenzt der Anschlag 33 das Verschwenken des Stechwerkzeugs 6 ist die zweite Schwenkrichtung 16. Im dargestellten Ausführungsbeispiel wird dies dadurch realisiert, dass der Flansch 35 an der Dämpfungseinrichtung 32 des Anschlags 33 anliegt. Das dargestellte Stechwerkzeug 6 befindet sich vor dem Einstechen in dem Boden 8 in der Ausgangslage unter einem vorgegebenen Einstechwinkel α.

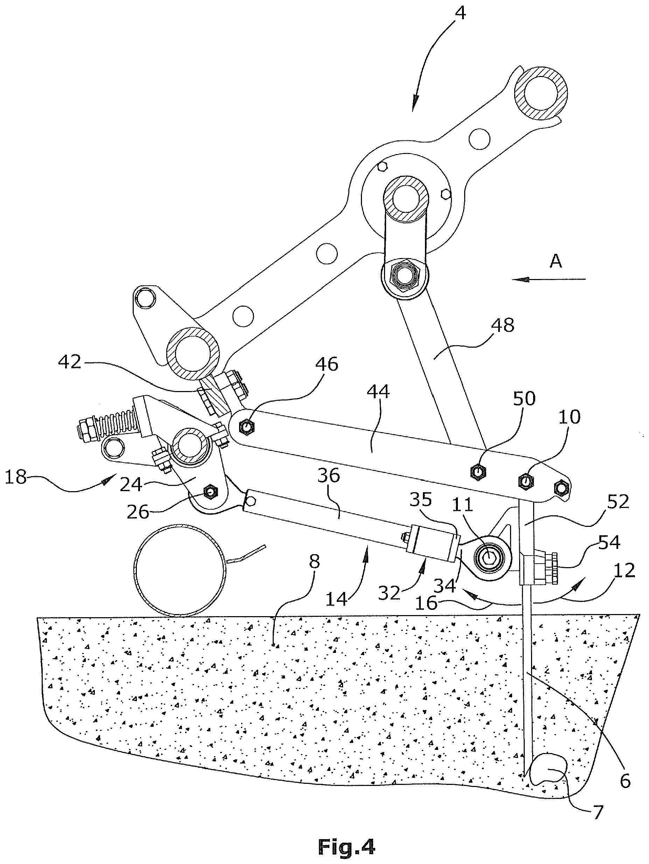

In Figur 4 ist das Stechwerkzeug 6 wieder im Boden eingestochen. Es ist in Figur 4 ein Zustand dargestellt, bei dem das Stechwerkzeug 6 auf einen harten Gegenstand, der im vorliegenden Fall ein Stein 7 ist, auftrifft. Dadurch wird das Stechwerkzeug 6 in Richtung der zweiten Schwenkrichtung 16 verschwenkt. In Figur 4 ist ein Zustand dargestellt, bei dem der Flansch 35 bereits an der Dämpfungseinrichtung 32 des Anschlags 33 anliegt. Somit begrenzt der Anschlag 33 bereits das Verschwenken des Stechwerkzeugs in die zweite Schwenkrichtung 16 und das Stechwerkzeug 6 befindet sich in der Ausgangslage.

Die vorliegende Erfindung sieht jedoch in vorteilhafterweise vor, dass die Rückholeinrichtung 14 mit einer Schutzeinrichtung 18 gekoppelt ist. Diese Schutzeinrichtung 18 erlaubt ein Verschwenken des Stechwerkzeugs 6 in die zweite Schwenkrichtung 16 über die Ausgangslage hinaus, so dass das Stechwerkzeug 6 beim Auftreffen auf einen harten Gegenstand im Boden 8, wie z. B. den Stein 7 durch Verschwenken des Stechwerkzeugs 6 in die zweite Schwenkrichtung 16 über die Ausgangslage hinaus verschwenkbar ist.

Die Schutzeinrichtung 18 ist in den Figuren 5 und 6 näher dargestellt. Die mit dem mindestens einen Stechwerkzeug 6 gekoppelte Rückholeinrichtung 14 ist über ein zweites Schwenkgelenk 26 mit der Schutzeinrichtung 18 gekoppelt. Die dargestellte Schutzeinrichtung 18 weist zumindest einen ersten Schwenkarm 24 und eine Federeinrichtung 22 auf, wobei der erste Schwenkarm 24 entgegen der Federkraft der Federeinrichtung 22 in die dritte Schwenkrichtung 60 verschwenkbar ist. Dabei verschwenkt der erste Schwenkarm 24 um die Schwenkachse 28. Dabei wird, wie in Figur 6 dargestellt die Feder der Federeinrichtung 22 zusammengedrückt. Die Feder 66 der Federeinrichtung 22 ist auf einem Bolzen 64 angeordnet. Der Bolzen 64 wird aufgrund der Schwenkbewegung des Schwenkarms 24, der sich auf beiden Seiten der Schwenkachse 28 erstreckt und mit dem Bolzen 64 gekoppelt ist, bewegt. Dadurch wird das Element 68 in Richtung des Elementes 62 bewegt, wodurch die Feder 66 zusammengedrückt wird.

Die Rückholeinrichtung 14 ist über das zweite Schwenkgelenk 26 mit dem Schwenkarm 24 gekoppelt. Wenn das Stechwerkzeug 6 auf einen harten Gegenstand 7 trifft und das Stechwerkzeug 6 sich bereits in der Ausgangslage befindet, kann das Stechwerkzeug 6 über die Ausgangslage hinaus in Richtung der zweiten Schwenkrichtung 16 bewegt werden. Dadurch wird auch die Rückholeinrichtung 14 und damit das Schwenkgelenk 26 bewegt. Die Rückholeinrichtung 14 und das Schwenkgelenk 26 verschwenken dabei den ersten Schwenkarm 24 in Richtung der dritten Schwenkrichtung 60. Der Schwenkarm 24 wird entgegen der Federkraft der Feder 66 der Federeinrichtung 22 verschwenkt. Auf diese Weise kann das Stechwerkzeug 6 dem harten Gegenstand, wie beispielsweise bei dem Stein 7, ausweichen und eine Beschädigung der Bodenbearbeitungsvorrichtung 1 vermieden werden. Die Federkraft der Federeinrichtung 22 der Schutzeinrichtung 18 ist derart gewählt, dass die Schutzeinrichtung 18 die Bewegung des Stechwerkzeugs 6 über die Ausgangslage hinaus erst erlaubt, wenn eine Kraft auf das Stechwerkzeug ausgeübt wird, die eine vorbestimmte Kraft überschreitet. Eine solche vorbestimmte Kraft tritt erst auf, wenn das Stechwerkzeug 6 auf einen harten Gegenstand im Boden 8, wie beispielsweise einem Stein 7, auftritt. Die vorbestimmte Kraft wird mittels mehrerer Testversuche bei unterschiedlichem Untergrund ermittelt.

Nachdem das Stechwerkzeug 6 wieder aus dem Boden 8 ausgezogen und wieder hinaufbewegt worden ist, wird der erste Schwenkarm 24 wieder aufgrund der Federkraft der Feder 66 der Federeinrichtung 22 in eine der dritten Schwenkrichtung 60 entgegengesetzte vierte Schwenkrichtung 70 zurückbewegt, bis ein Teil des Schwenkarms 24 an einem Schutzeinrichtungsanschlag 30 anschlägt, der die Bewegung in die vierte Schwenkrichtung 70 beschränkt. Der Schutzeinrichtungsanschlag 30 ist an dem Element 62 angeordnet. Wenn der Schwenkarm 24 bereits am Schutzeinrichtungsanschlag 30 anliegt, kann der erste Schwenkarm 24 nicht weiter in Richtung der vierten Schwenkrichtung aufgrund des Anschlags 30 verschwenkt werden.

Sofern das Stechwerkzeug 6 auf einen harten Gegenstand trifft und anstatt in die zweite in die erste Schwenkrichtung (12) verschwenkt wird, kann dies auch ausgeführt werden, da die Rückholeinrichtung 14 aufgrund der darin angeordneten Feder ein Verschwenken in die erste Schwenkrichtung 12 erlaubt. Somit wird auch eine Beschädigung der Bodenbearbeitungsvorrichtung 1 in diesem Fall vermieden.

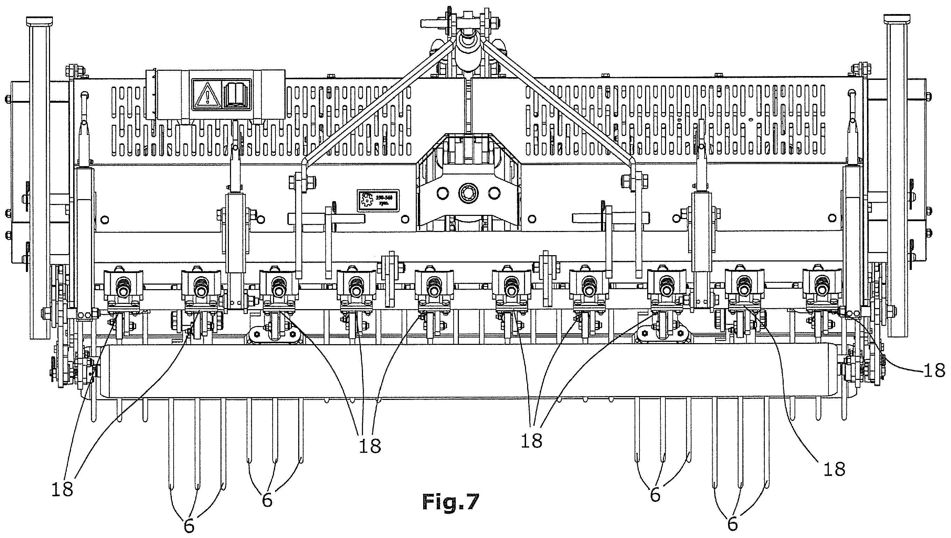

Aus Figur 7, die eine Rückansicht der Bodenbearbeitungsvorrichtung 1 darstellt, kann entnommen werden, dass mehrere Werkzeughalter 52 nebeneinander angeordnet sind, an denen jeweils mehrere Stechwerkzeuge 6 befestigt sind. Es ist jeweils eine Rückholeinrichtung 14 mit jeweils einem Werkzeughalter 52 gekoppelt, wobei die Rückholeinrichtung 14 jeweils mit einer Schutzeinrichtung 18 gekoppelt ist.

Dies hat den Vorteil, dass mehrere Schutzeinrichtungen 18 vorgesehen sind, so dass, wenn einzelne Stechelemente 6 auf einen harten Gegenstand treffen, lediglich die mit dem dazugehörigen Werkzeughalter 52 verbundende Schutzeinrichtung 18 betätigt wird. Ferner können einzelne Schutzeinrichtungen 18 einzeln ausgetauscht werden, wenn diese abgenutzt sind.

Durch die oben beschriebene Bodenbearbeitungsvorrichtung 1 und das dazugehörige Verfahren kann die Beschädigung einer Bodenbearbeitungsvorrichtung 1 aufgrund des Auftreffens von den Stechwerkzeugen 6 auf einen harten Gegenstand im Boden 8 vermieden werden. Es können lediglich durch das Auftreffen kleine Beschädigungen an dem Stechwerkzeug 6 auftreten. Diese Stechwerkzeuge 6 können jedoch leicht ausgetauscht werden.

## Patentansprüche

1. Fahrbare Bodenbearbeitungsvorrichtung (1), mit
- einem Maschinenrahmen (42),
- einem Antrieb (4) für mindestens ein auf- und abbewegbares Stechwerkzeug (6), wobei das Stechwerkzeug (6) in den Boden (8) einstechbar und wieder herausziehbar ist,
- wobei sich das Stechwerkzeug (6) vor dem Einstechen in den Boden (8) in einer Ausgangslage unter einem vorgegebenen Einstechwinkel (α) befindet und im Boden (8) aufgrund der Bewegung des Maschinenrahmens (42) in Fahrtrichtung (A) eine die Auf- und Abbewegung überlagernde Schwenkbewegung um eine erste Schwenkachse (10) in Richtung einer ersten Schwenkrichtung (12) ausführt,
- einer mit dem Stechwerkzeug (6) gekoppelten Rückholeinrichtung (14), die das Stechwerkzeug (6) nach dem Austritt aus dem Boden (8) zurück in die Ausgangslage durch Verschwenken des Stechwerkzeugs (6) in eine der ersten Schwenkrichtung (12) entgegengesetzte zweite Schwenkrichtung (16) überführt,
**dadurch gekennzeichnet,**
**dass** die Rückholeinrichtung (14) mit einer Schutzeinrichtung (18) gekoppelt ist, die ein Verschwenken des Stechwerkzeugs (6) in die zweite Schwenkrichtung (16) über die Ausganglage hinaus erlaubt, so dass das Stechwerkzeug (6) beim Auftreffen auf einen harten Gegenstand im Boden (8) durch Verschwenken des Stechwerkzeugs (6) in die zweite Schwenkrichtung (16) über die Ausgangslage hinaus verschwenkbar ist,
wobei
ein Anschlag vorgesehen ist, der das Verschwenken des Stechwerkzeugs (6) in die zweite Schwenkrichtung (16) bei Erreichen der Ausgangslage begrenzt, wobei
die Schutzeinrichtung (18) eine Federeinrichtung aufweist und die Federkraft der Federeinrichtung derart gewählt ist, dass die Schutzeinrichtung (18) die Bewegung des Stechwerkzeugs (6) über die Ausgangslage hinaus erst erlaubt, wenn eine Kraft auf die Stechwerkzeuge (6) ausgeübt wird, die eine vorbestimmte Kraft überschreitet.

2. Bodenbearbeitungsvorrichtung (1) nach Anspruch 1, **dadurch gekennzeichnet, dass** die mit dem mindestens einen Stechwerkzeug (6) gekoppelte Rückholeinrichtung (14) über ein zweites Schwenkgelenk (26) mit der Schutzeinrichtung (18) gekoppelt ist.

3. Bodenbearbeitungsvorrichtung (1) nach einem der Ansprüche 1 bis 2, **dadurch gekennzeichnet, dass** die Schutzeinrichtung (18) zumindest einen ersten Schwenkarm (24) und die Federeinrichtung aufweist, wobei der erste Schwenkarm (24) entgegen der Federkraft der Federeinrichtung (22) in eine dritte Schwenkrichtung (60) verschwenkbar ist, wobei die Rückholeinrichtung (14) über das zweite Schwenkgelenk (26) mit dem ersten Schwenkarm der Schutzeinrichtung (18) gekoppelt ist.

4. Bodenbearbeitungsvorrichtung (1) nach Anspruch 3, **dadurch gekennzeichnet, dass** beim Verschwenken des Stechwerkzeugs (6) über die Ausgangslage hinaus das zweite Schwenkgelenk (26) der Rückholeinrichtung (14) bewegbar ist, so dass der mit dem zweiten Schwenkgelenk (26) gekoppelte erste Schwenkarm (24) der Schutzeinrichtung (18) entgegen der Federkraft der Federeinrichtung der Schutzeinrichtung (18) in eine dritte Schwenkrichtung verschwenkbar ist.

5. Bodenbearbeitungsvorrichtung (1) nach einem der Ansprüche 1 bis 4, **dadurch gekennzeichnet, dass** die Rückholeinrichtung (14) eine KolbenZylindereinheit ist.

6. Bodenbearbeitungsvorrichtung (1) nach einem der Ansprüche 1 bis 5, **dadurch gekennzeichnet, dass** zumindest ein Werkzeughalter für das mindestens eine Stechwerkzeug (6) vorgesehen ist, der um die erste Schwenkachse (10) in dem von dem Antrieb (4) auf- und abbewegbaren Führungsarm gelagert ist.

7. Bodenbearbeitungsvorrichtung (1) nach Anspruch 6, **dadurch gekennzeichnet, dass** mehrere Stechwerkzeuge (6) an einem Werkzeughalter befestigt sind.

8. Bodenbearbeitungsvorrichtung (1) nach Anspruch 6 oder 7, **dadurch gekennzeichnet, dass** mehrere Werkzeughalter nebeneinander angeordnet sind, an denen jeweils mehrere Stechwerkzeuge (6) befestigt sind, wobei jeweils eine Rückholeinrichtung (14) mit jeweils einem Werkzeughalter gekoppelt ist, wobei die Rückholeinrichtungen (14) jeweils mit einer Schutzeinrichtung (18) gekoppelt sind.

9. Bodenbearbeitungsvorrichtung (1) nach einem der Ansprüche 2 bis 8, **dadurch gekennzeichnet, dass** der erste Schwenkarm (24) der Schutzeinrichtung (18) entgegen der Federkraft der Federeinrichtung in die dritte Schwenkrichtung (60) verschwenkbar ist, wobei ein Schutzeinrichtungsanschlag vorgesehen ist, der das Verschwenken des ersten Schwenkarms (24) in die der dritten Schwenkrichtung entgegengesetzte vierte Schwenkrichtung (70) begrenzt.

10. Verfahren zum Bearbeiten eines Bodens (8) durch
- Ziehen oder Fahren einer Bodenbearbeitungsvorrichtung (1) über einen Bodenfläche,
- Einstechen und Herausziehen von mit einem Maschinenrahmen gekoppelten mindestens einem Stechwerkzeug (6) in den Boden (8),
- wobei sich das Stechwerkzeug (6) vor dem Einstechen in den Boden (8) in einer Ausgangslage unter einem vorgegebenen Einstechwinkel (α) befindet und im Boden (8) aufgrund der Bewegung des Maschinenrahmens (42) in Fahrtrichtung eine die Aufund Abbewegung überlagernde Schwenkbewegung um eine erste Schwenkachse (10) in Richtung einer ersten Schwenkrichtung (12) ausführt,
- wobei das Stechwerkzeug (6) nach dem Austritt aus dem Boden (8) zurück in die Ausgangslage durch Verschwenken des Stechwerkzeug (6) in eine der ersten Schwenkrichtung (12) entgegengesetzte zweite Schwenkrichtung (16) überführt wird,
**dadurch gekennzeichnet,**
**dass** ein Anschlag vorgesehen ist, der das Verschwenken des Stechwerkzeugs in die zweite Schwenkrichtung (16) beim Erreichen der Ausgangslage begrenzt,
wobei das Stechwerkzeug (6) beim Auftreffen auf einen harten Gegenstand im Boden (8) durch Verschwenken des Stechwerkzeugs (6) in die zweite Schwenkrichtung (16) über die Ausgangslage hinaus verschwenkt wird, wobei
das Stechwerkzeug (6) über die Ausgangslage hinaus verschwenkt wird, wenn eine Kraft auf das Stechwerkzeug (6) ausgeübt wird, die eine vorbestimmte Kraft überschreitet.

## Claims

1. A mobile soil-working device (1) comprising:
- a machine frame (42),
- a drive (4) for at least one insertion tool (6) that can be moved up and down and inserted into the ground (8) and pulled out again,
- the insertion tool (6) being in a starting position at a predefined insertion angle (α) before insertion into the ground (8) and, when in the ground (8), executing a pivoting movement, which is superposed on the up and down movement, about a first pivot axis (10) in the direction of a first pivoting direction (12) owing to the movement of the machine frame (42) in the direction of travel (A),
- a returning means (14), which is coupled to the insertion tool (6) and moves the insertion tool (6) back into the starting position after its exit from the ground (8) by pivoting the insertion tool (6) in a second pivoting direction (16) opposite to the first pivoting direction (12),
**characterized in**
**that** the returning means (14) is coupled to a protective means (18), which allows pivoting of the insertion tool (6) in the second pivoting direction (16) beyond the starting position, such that the insertion tool (6) can be pivoted beyond the starting position by pivoting of the insertion tool (6) in the second pivoting direction (16) when it hits a hard object in the ground (8), wherein a stop is provided that limits the pivoting of the insertion tool (6) in the second pivoting direction (16) when the starting position is reached, wherein the protective means (18) comprises a spring means and the spring force of the spring means is chosen such that the protective means (18) allows the movement of the insertion tool (6) beyond the starting position only when a force is exerted on the insertion tools (6) that exceeds a predetermined force.

2. The soil-working device (1) of claim 1, **characterized in that** the returning means (14) coupled to the at least one insertion tool (6) is coupled to the protective means (18) via a second pivot joint (26).

3. The soil-working device (1) of one of claims 1 to 2, **characterized in that** the protective means (18) comprises at least a first pivot arm (24) and the spring means, wherein the first pivot arm (24) is adapted to be pivoted in a third pivoting direction (60) against the spring force of the spring means (22), wherein the returning means (14) is coupled to the first pivot arm of the protective means (18) via the second pivot joint (26).

4. The soil-working device (1) of claim 3, **characterized in that** the second pivot joint (26) of the returning means (14) is adapted to be moved when the insertion tool (6) is pivoted beyond the starting position, so that the first pivot arm (24) of the protective means (18), which is coupled to the second pivot joint (26), can be pivoted in a third pivoting direction against the spring force of the spring means of the protective means (18).

5. The soil-working device (1) of one of claims 1 to 4, **characterized in that** the returning means (14) is a piston-cylinder unit.

6. The soil-working device (1) of one of claims 1 to 5, **characterized in that** at least one tool holder is provided for the at least one insertion tool (6), the tool holder being supported about the first pivot axis (10) in the guide arm adapted to be moved up and down by the drive (4).

7. The soil-working device (1) of claim 6, **characterized in that** a plurality of insertion tools (6) are mounted to one tool holder.

8. The soil-working device (1) of one of claims 6 or 7, **characterized in that** a plurality of tool holders are arranged side by side, each having a plurality of insertion tools (6) mounted thereto, wherein one returning means (14) is coupled to one tool holder, respectively, while the returning means (14) are respectively coupled to a protective means (18).

9. The soil-working device (1) of one of claims 2 to 8, **characterized in that** the first pivot arm (24) of the protective means (18) is adapted to be pivoted in the third pivoting direction (60) against the spring force of the spring means, wherein a protective means stop is provided that limits the pivoting of the first pivot arm (24) in the fourth pivoting direction (70) that is opposite to the third pivoting direction.

10. A method for working soil (8) by:
- pulling or driving a soil-working device (1) over a soil surface,
- inserting and pulling at least one insertion tool (6) into and out from the soil (8), the insertion tool being coupled to a machine frame,
- wherein, prior to insertion into the soil (8), the insertion tool (6) is in a starting position under a predefined insertion angle (α) and, when in the ground, performs a pivoting movement about a first pivot axis (10) in the direction of a first pivoting direction (12) due to the movement of the machine frame (42) in the traveling direction, the pivoting movement superposing the up and down movement,
- wherein, after having left the soil (8), the insertion tool (6) is returned back to the starting position by pivoting the insertion tool (6) in a second pivoting direction (16) opposite to the first pivoting direction (12)
**characterized in that**
a stop is provided that limits the pivoting of the insertion tool in the second pivoting direction (16) when the starting position is reached,
when hitting a hard object in the soil (8), the insertion tool (6) is pivoted beyond the starting position by pivoting the insertion tool (6) in the second pivoting direction (16),
wherein the insertion tool (6) is pivoted beyond the starting position when a force is exerted on the insertion tool (6) that exceeds a predetermined force.

## Revendications

1. Dispositif mobile de travail du sol (1), avec :
- un châssis de machine (42) ;
- un entraînement (4) pour au moins un outil de saignée (6) pouvant être déplacé vers le haut et vers le bas, selon lequel l'outil de saignée (6) peut être enfoncé dans le sol (8) et peut être de nouveau extrait du sol ;
- selon lequel l'outil de saignée (6) se trouve, avant la saignée dans le sol (8), dans une position de départ sous un angle de saignée (α) prédéfini, et exécute un mouvement de pivotement dans le sol (8), sur la base du déplacement du châssis de machine (42) dans la direction de la conduite (A), lequel mouvement de pivotement se superpose au mouvement vers le haut et vers le bas, autour d'un premier axe de pivotement (10) dans la direction d'une première direction de pivotement (12) ;
- un mécanisme de rappel (14), lequel est couplé avec l'outil de saignée (6) et lequel fait revenir l'outil de saignée (6) dans sa position de départ après l'extraction hors du sol (8), par un pivotement de l'outil de saignée (6) dans une deuxième direction de pivotement (16), laquelle est en sens inverse de la première direction de pivotement (12) ;
**caractérisé en ce que**
le mécanisme de rappel (14) est couplé avec un mécanisme de protection (18) qui permet un pivotement de l'outil de saignée (6) dans la deuxième direction de pivotement (16), au-delà de la position de départ, de telle sorte que l'outil de saignée (6) est capable de pivoter dans la deuxième direction de pivotement (16), au-delà de la position de départ, par le pivotement de l'outil de saignée (6) quand ce dernier rencontre un objet dur dans le sol (8) ;
selon lequel une butée est prévue, laquelle restreint le pivotement de l'outil de saignée (6) dans la deuxième direction de pivotement (16) quand la position de départ est atteinte ;
selon lequel le mécanisme de protection (18) présente un mécanisme à ressort et la force du ressort du mécanisme à ressort est sélectionnée de telle sorte que le mécanisme de protection (18) ne permet le déplacement de l'outil de saignée (6) au-delà de la position de départ que quand une force exercée sur l'outil de saignée (6) dépasse une force prédéterminée.

2. Dispositif de travail du sol (1) selon la revendication 1, **caractérisé en ce que** le mécanisme de rappel (14) qui est couplé avec l'au moins un outil de saignée (6) est couplé avec le mécanisme de protection (18) par l'intermédiaire d'une deuxième articulation pivotante (26).

3. Dispositif de travail du sol (1) selon l'une des revendications 1 à 2, **caractérisé en ce que** le mécanisme de protection (18) présente tout au moins un premier bras de pivotement (24) et le mécanisme à ressort ;
selon lequel le premier bras de pivotement (24) est capable de pivoter dans une troisième direction de pivotement (60), à l'encontre de la force du ressort du mécanisme à ressort (22) ;
selon lequel le mécanisme de rappel (14) est couplé avec le premier bras de pivotement (24) du mécanisme de protection (18) par l'intermédiaire de la deuxième articulation pivotante (26).

4. Dispositif de travail du sol (1) selon la revendication 3, **caractérisé en ce que** la deuxième articulation pivotante (26) du mécanisme de rappel (14) peut être déplacée au-delà de la position de départ lors du pivotement de l'outil de saignée (6), de telle sorte que le premier bras de pivotement (24) du mécanisme de protection (18), lequel premier bras de pivotement (24) est couplé avec la deuxième articulation pivotante (26), est capable de pivoter dans une troisième direction de pivotement (60), à l'encontre de la force du ressort du mécanisme à ressort du mécanisme de protection (18).

5. Dispositif de travail du sol (1) selon l'une des revendications 1 à 4, **caractérisé en ce que** le mécanisme de rappel (14) est une unité à cylindre et à piston.

6. Dispositif de travail du sol (1) selon l'une des revendications 1 à 5, **caractérisé en ce que** tout au moins un porte-outil est prévu pour l'au moins un outil de saignée (6), lequel porte-outil est logé autour du premier axe de pivotement (10), dans le bras de guidage pouvant être déplacé vers le haut et vers le bas par l'entraînement (4).

7. Dispositif de travail du sol (1) selon la revendication 6, **caractérisé en ce que** plusieurs outils de saignée (6) sont fixés à un porte-outil.

8. Dispositif de travail du sol (1) selon la revendication 6 ou 7, **caractérisé en ce que** plusieurs porte-outils sont disposés les uns à côté des autres, auxquels plusieurs outils de saignée (6) sont respectivement fixés ;
selon lequel respectivement un mécanisme de rappel (14) est avec couplé respectivement un porte-outil ;
selon lequel les mécanismes de rappel (14) sont couplés respectivement avec un mécanisme de protection (18).

9. Dispositif de travail du sol (1) selon l'une des revendications 2 à 8, **caractérisé en ce que** le premier bras de pivotement (24) du mécanisme de protection (18) est capable de pivoter dans la troisième direction de pivotement (60), à l'encontre de la force du ressort du mécanisme à ressort ;
selon lequel une butée du mécanisme de protection est prévue, laquelle restreint le pivotement du premier bras de pivotement (24) dans la quatrième direction de pivotement (70), laquelle est en sens inverse de la troisième direction de pivotement (60).

10. Procédé destiné au travail d'un sol (8) par :
- la traction ou le déplacement d'un dispositif de travail du sol (1) sur une surface de sol ;
- la saignée dans le sol (8) et l'extraction hors du sol d'au moins un outil de saignée (6) couplé avec un châssis de machine ;
- selon lequel l'outil de saignée (6) se trouve, avant la saignée dans le sol (8), dans une position de départ sous un angle de saignée (α) prédéfini, et exécute un mouvement de pivotement dans le sol (8), sur la base du déplacement du châssis de machine (42) dans la direction de la conduite, lequel mouvement de pivotement se superpose au mouvement vers le haut et vers le bas, autour d'un premier axe de pivotement (10) dans la direction d'une première direction de pivotement (12) ;
- selon lequel l'outil de saignée (6) revient dans la position de départ après l'extraction hors du sol (8), par un pivotement de l'outil de saignée (6) dans une deuxième direction de pivotement (16), laquelle est en sens inverse de la première direction de pivotement (12) ;
**caractérisé en ce que**
une butée est prévue, laquelle restreint le pivotement de l'outil de saignée dans la deuxième direction de pivotement (16), quand la position de départ est atteinte ;
selon lequel l'outil de saignée (6) est pivoté dans la deuxième direction de pivotement (16), au-delà de la position de départ, par le pivotement de l'outil de saignée (6), quand ce dernier rencontre un objet dur dans le sol (8) ;
selon lequel l'outil de saignée (6) est pivoté au-delà de la position de départ, quand une force exercée sur l'outil de saignée (6) dépasse une force prédéterminée.
